# EUROPEAN PATENT SPECIFICATION

(11) **EP 3 100 941 B1**
(45) Date of publication and mention of the grant of the patent: **24.02.2021**
(21) Application number: 16170745.0
(22) Date of filing: 20.05.2016
(51) Int. Cl.: B62M 11/06, B62M 7/12, F16H 1/00, B62M 11/02, B62M 21/00, F16D 3/12, F16F 15/121

(54) **STRADDLED ELECTRIC VEHICLE**
ELEKTRISCHES SATTELFAHRZEUG
VÉHICULE ÉLECTRIQUE À CALIFOURCHON

(30) Priority: 02.06.2015 JP 2015112567
(43) Date of publication of application: 07.12.2016
(73) Proprietor: Yamaha Hatsudoki Kabushiki Kaisha, Shizuoka-ken Shizuoka 438-8501 (JP)
(72) Inventor: Yoneda, Yuuichi, Shizuoka, Shizuoka 438-8501 (JP)
(74) Representative: Moreland, David

(56) References cited:
- EP-A2- 0 901 956
- JP-A- S6 298 030
- JP-A- S61 157 851
- JP-A- 2004 257 536
- JP-A- 2013 053 673

## Description

### FIELD OF INVENTION

The present invention relates to a straddled electric vehicle. More particularly, the present invention relates to an off-road straddled electric vehicle.

### BACKGROUND OF INVENTION

Straddled electric vehicles include electric motorcycles, for example. An electric motorcycle is disclosed in WO 2012/90245 (KAWASAKI), for example. In the electric motorcycle disclosed in WO 2012/90245, driving power from the motor is transmitted to a rear wheel shaft via a power transmission mechanism to rotate a rear wheel.

An off-road straddled electric vehicle often travels on poor or bad roads. As such, while the vehicle is travelling, irregularities on the road may cause the vehicle to bounce or jump such that a rear wheel leaves the ground. The rear wheel is under no-load conditions after a rear wheel leaves the ground due to a bounce or jump until the rear wheel lands on the ground, and is then under a load again. That is, the magnitude of the load on the rear wheel dramatically changes. As the magnitude of the load on the rear wheel changes dramatically, an overcurrent flows in the motor. Thus, there may be a moment at which, even when the rider operates the throttle grip, the associated control may not be transmitted to the motor.

In view of the above problems, an object of the present invention is to provide a straddled electric vehicle that seeks to prevent overcurrent flowing when the load on the driving wheel dramatically changes.

It is an object of the present invention to obviate or at least mitigate one or more problems or disadvantages in the prior art.

EP0 901 956 A2 (HONDA) discloses the preamble of claim 1. This document discloses a power unit less affected by the length of a cylinder of an engine. To achieve this, a cam shaft drive mechanism composed of a cam shaft drive pulley, a belt, a pair of cam shaft pulleys, and a tensioner is disposed on the front surface of a power unit. Since the cylinder is disposed in the width direction of the vehicular body with its cylinder axis substantially in the horizontal direction (for example, a tilt angle α with respect to the ground is set at + 10°), the center of gravity of the vehicle is lowered and also the cylinder length can be set within the vehicular width.

### SUMMARY OF INVENTION

The present invention is defined by independent claim 1. Optional and/or preferred features are defined in the dependent claims appended hereto.

According to a first aspect of the present invention there is provided a straddled electric vehicle comprising:
a motor comprising an electric motor;
a driving wheel; and
a power transmission mechanism having a plurality of shafts for transmitting driving power from the motor to the driving wheel,
the power transmission mechanism comprising:
   a first shaft having spline gears on a surface thereof, the spline gears being inclined relative to an axial direction;
   a rotating member attached to the first shaft and having spline gears engageable with the spline gears on the first shaft, the rotating member being capable of exchanging a rotating force with the first shaft; and
   an elastic member capable of biasing one of the rotating member attached to the first shaft and the first shaft toward an axial direction,
   wherein the spline gears on the first shaft are inclined so as to move the rotating member or the first shaft toward the other axial direction when the driving wheel is rotating in a direction causing the straddled electric vehicle to advance and the rotating member or the first shaft acts to maintain a speed of rotation of the driving wheel as the speed of rotation is decreasing.

In the above arrangement, the first shaftengages the rotating member by means of the spline gears or grooves. The spline gears or grooves are inclined relative to the/an axial direction, e.g. such that the rotating force of the rotating member acts in a direction inclined relative to the first shaft. Thus, part of the rotating force of the rotating member is transmitted to the shaft as a force causing the rotating member to move in an axial direction relative to the first shaft, and the remaining rotating force is transmitted to the shaft as a force causing the first shaft to rotate about its axis.

The power transmission mechanism further includes an elastic member for biasing the rotating member or first shaft in one axial direction. When the motor is beginning or starting to drive the rotating member, part of the rotating force of the rotating member is transmitted to the shaft as a force causing the rotating member to move in an axial direction relative to the first shaft. The elastic member is pushed by the rotating member or first shaft and thereby increases an elastic force thereof. When the elastic force of the elastic member increases, part of the rotating force of the rotating member (i.e. rotating force acting in an axial direction) and the elastic force of the elastic member is eventually brought into balance such that the rotating member and first shaft do not move any more relative to each other in an axial direction. The rotating force of the rotating member is transmitted as a force causing the first shaft to rotate about the axis.

In this state, while the vehicle may be travelling, the magnitude of the load on the driving wheel may decrease such that the driving wheel is substantially under no-load conditions, which increases the speed of rotation of the driving wheel from that encountered during normal travelling. Further, if the magnitude of the load on the driving wheel decreases such that the wheel may be substantially under no-load conditions, the rotating member or first shaft may be caused by the elastic force of the elastic member to move in one direction.

Subsequently, when a large load may be suddenly applied to the driving wheel once again, the driving wheel may stop rotating temporarily. When the driving wheel suddenly stops, the first shaft or rotating member may move in the axial direction that is opposite the one direction due to the effects of the spline grooves, and continue to rotate while squeezing the elastic member. That is, there may be a rotation phase difference between the rotation of the rotating member and that of the first shaft. When there may be a rotation phase difference between the rotation of the rotating member and that of the first shaft, there may be a time lag between the time at which the effect of the load applied to the driving wheel (that is, temporary halt of the first shaft) occurs and the time at which this effect affects the driving of the motor (that is, rotation of the rotating member). This may act to prevent an overcurrent flowing in the motor due to a load suddenly applied to the driving wheel.

Preferably, the rotating member or the first shaft of the straddled electric vehicle of the present invention may move in the other axial direction while resisting an elastic force of the elastic member.

Preferably, when the rotating member or the first shaft of the straddled electric vehicle of the present invention may not be transmitting the driving power to the driving wheel, the elastic member may apply essentially no elastic force to the rotating member or the first shaft.

In the above arrangement, when the rotating member or first shaft may not be transmitting driving power to the driving wheel, the elastic member may apply essentially no elastic force to the rotating member or first shaft. Thus, when the rotating member or first shaft of the straddled electric vehicle transitions to such a state, it may be immediately possible to tolerate a phase difference between the rotation of the rotating member and that of the first shaft. Problems may occur if the vehicle is not in the above arrangement, i.e. if the vehicle is constructed such that, when the rotating member or first shaft is not transmitting driving power to the driving wheel, the elastic member exerts a certain elastic force to the rotating member or first shaft. That is, until the driving power transmitted by the rotating member or first shaft via the spline grooves exceeds a certain elastic force, it cannot squeeze the elastic member, causing no phase difference in rotation. The rotating member or first shaft not transmitting driving power to the driving wheel means not only the motor not rotating, but also the driving wheel being rotated by a force other than driving power transmitted from the motor when the driving wheel is off the ground or the vehicle is travelling on a downward slope, for example.

Preferably, out of the rotating member and the first shaft of the straddled electric vehicle of the present invention, the rotating member may move in the other axial direction.

In the above arrangement, the rotating member may be movable, which may prevent the bearing structure from becoming complicated compared with implementations where the first shaft moves. Further, since out of the rotating member and first shaft, the rotating member may be movable, the object pushed by the elastic member via an elastic force thereof may be the rotating member. Since the rotating member may have a diameter larger than that of the first shaft, the structure used by the elastic member to apply an elastic force to the object may be prevented from becoming complicated.

Preferably, the elastic member of the straddled electric vehicle of the present invention may be a disc spring for applying an elastic force pushing the rotating member in the one direction.

In the above arrangement, due to the large elastic modulus of a disc spring, the spring may have a large elastic force even if elastic deformation may be small. Since driving power which may have a large torque may be transmitted to the driving shaft by the power transmission mechanism, a disc spring with a large elastic modulus may be suitable for the elastic member.

Preferably, the plurality of shafts of the straddled electric vehicle of the present invention may comprise or include a motor shaft capable of being rotated by the driving power of the motor and a driving shaft capable of rotating the driving wheel, wherein the first shaft may be the driving shaft.

In the above arrangement, in the driving power transmission mechanism, the speed of rotation may decrease when driving power is transmitted from the motor shaft to the driving shaft. In other words, speed increases as it goes toward the motor shaft from the driving shaft. Thus, even if the rotating member or first shaft may be moved due to the inclined spline grooves in an axial direction by a small distance, it may be possible to efficiently reduce effects on the motor. That is, the size thereof as measured in the vehicle width direction can be reduced.

Preferably, the plurality of shafts of the straddled electric vehicle of the present invention may further comprise an intermediate shaft capable of transmitting the driving power transmitted from the motor shaft to the driving shaft. The rotating member engaging the driving shaft may be a gear coaxial with the driving shaft.

In the above arrangement, the driving power transmission mechanism may comprise an intermediate shaft between the motor shaft and driving shaft. The inclined spline grooves may be located distant from the motor shaft. Thus, the inertia of the rotating member rotating together with the motor shaft may increase. This may reduce effects on the motor more efficiently.

In this case, preferably, the spline grooves provided on the driving shaft and the rotating member of the straddled electric vehicle of the present invention may be inclined relative to the axial direction by 40 to 50 degrees.

In the above arrangement, part of the driving power transmitted to the driving shaft from the rotating member can be efficiently directed to an axial direction of the driving shaft.

The plurality of shafts of the straddled electric vehicle of the present invention may comprise:
a motor shaft which may be capable of being rotated by the driving power of the motor;
a driving shaft which may be capable of rotating the driving wheel, and/or
an intermediate shaft which may be capable of transmitting the driving power transmitted from the motor shaft to the driving shaft. The first shaft may be the intermediate shaft.

The plurality of shafts of the straddled electric vehicle of the present invention may comprise:
a motor shaft which may be capable of being rotated by the driving power of the motor; and/or
a driving shaft which may be capable of rotating the driving wheel. The first shaft may be the motor shaft.

The rotating member engaging the motor shaft may be a member including a rotor of the motor.

In this case, preferably, the elastic member of the straddled electric vehicle may bias the motor shaft toward the one direction.

The vehicle is constructed to receive driving power from the motor to move or travel.

The motor is an electric motor.

Other features, elements, steps, characteristics and advantages of the present invention will become more apparent from the following detailed description of the preferred embodiments of the present invention with reference to the attached drawings.

### BRIEF DESCRIPTION OF DRAWINGS

Embodiments of the present invention will now be described, by way of example only, with reference to the accompanying drawings, which are:
- **Figure 1**: a left side view of an electric motorcycle according to a first embodiment of the present invention;
- **Figure 2**: a left side view of a drive unit of the electric motorcycle of Figure 1;
- **Figure 3**: a cross-sectional view of the drive unit of Figure 2 taken along line III-III;
- **Figure 4**: an enlarged view of the main components of Figure 3, illustrating a first state of a mechanism for tolerating a rotation phase difference;
- **Figure 5**: an enlarged view of the main components of Figure 3, illustrating a second state of a mechanism for tolerating a rotation phase difference;
- **Figure 6**: a cross-sectional view of a drive unit according to a second embodiment of the present invention; and
- **Figure 7**: a cross-sectional view of a drive unit according to a third embodiment of the present invention.

### DETAILED DESCRIPTION OF THE PREFERRED EMBODIMENTS

An off-road straddled electric vehicle often travels on poor or bad roads. As such, while the vehicle is travelling, irregularities on the road may cause the vehicle to jump such that the rear wheel leaves the ground. When the rider does not intend the rear wheel to leave the ground, the rear wheel may leave the ground with the throttle grip fully turned. In this case, driving power from the motor continues to be transmitted to the rear wheel shaft.

When the rear wheel leaves the ground, there is no longer friction acting between the ground and rear wheel, causing the rear wheel to slip. As the rear wheel is slipping, the speed of rotation of the motor rapidly increases.

When the rear wheel leaves the ground and becomes under no-load conditions and then the rear wheel contacts the ground, friction between the rear wheel and ground causes a load on the rear wheel shaft once again. Since the rear wheel shaft suddenly transitions from a no-load condition to a load condition, the rear wheel stops rotating for a certain period of time. That is, the rotation of the rotor of the motor connected to the rear wheel shaft suddenly stops.

When the rotor of the motor suddenly stops rotating, such increases the magnetic field between the rotor and stator to compensate for the rotor suddenly stopping, which increases the magnitude of current flowing in the stator (that is, an overcurrent flows). When the magnitude of overcurrent exceeds a predetermined threshold, controls associated with the throttle grip operated by the rider may not be transmitted to the motor temporarily between the time at which the magnitude of current exceeds the threshold and the time at which it returns to the original level.

In view of the above problems, the present inventors investigated what structure would not transmit sudden changes in the load on the rear wheel to the motor in a direct manner. The inventors found that providing in the power transmission mechanism a mechanism for tolerating a rotation phase difference on the driving transmission path between the motor and rear wheel will prevent sudden changes in the load on the rear wheel from being directly transmitted to the motor.

Preferred embodiments of the present invention will be described in detail with reference to the accompanying drawings. For ease of explanation, the drawings which will be referred to in the description below schematically show only those of the components of the embodiments of the present invention that are the main components necessary to illustrate the present invention. As such, the present invention may include any component not shown in any of the drawings. Further, the sizes of the components in the drawings do not exactly represent the actual sizes and size ratios of the components.

### FIRST EMBODIMENT

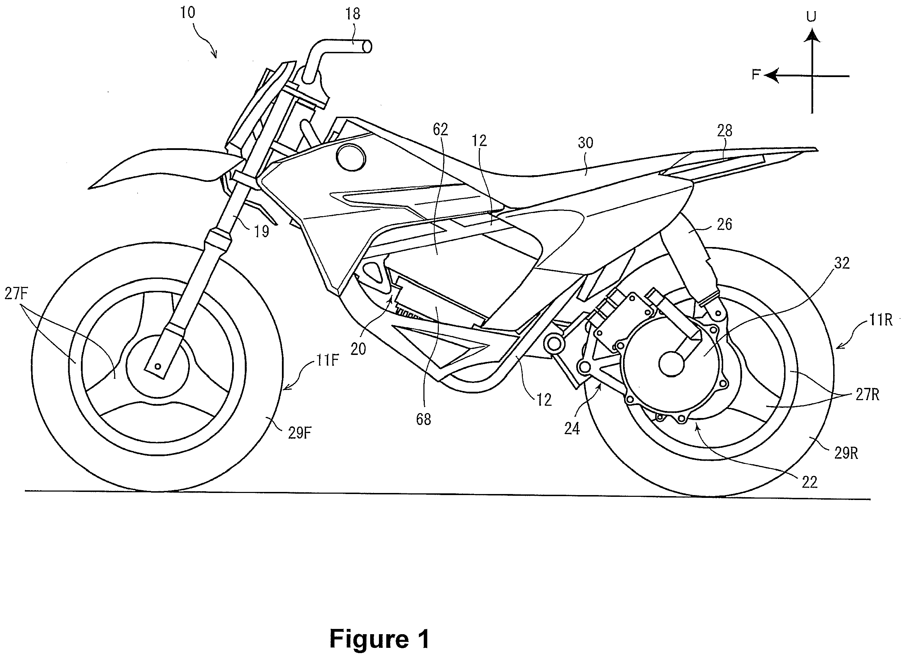

A straddled electric vehicle according to a first embodiment of the present invention will be described below with reference to Figures 1 to 5. The present embodiment will be described in connection with an electric motorcycle as an example of the straddled electric vehicle. The same or corresponding parts in the drawings are labeled with the same characters and their description will not be repeated.

### Overall Construction of Electric Motorcycle

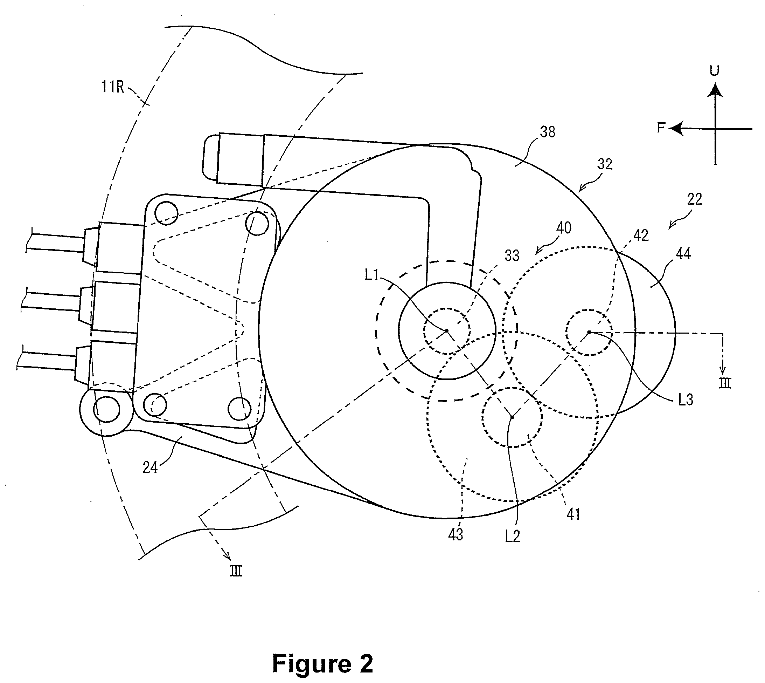

Figure 1 is a left side view of an electric motorcycle 10 according to a first embodiment of the present invention. In the description below, forward/front, rear(ward), left and right means such directions as perceived by a rider sitting on the seat 30 of the electric motorcycle 10. In Figure 1, arrow F indicates the forward direction with respect to the electric motorcycle 10, while arrow U indicates the upward direction with respect to the electric motorcycle 10 (the same applies to Figure 2 below).

The overall construction of the electric motorcycle 10 will be described with reference to Figure 1. The electric motorcycle 10 comprises a front wheel 11F, a rear wheel 11R, a vehicle body frame 12, handlebars 18, a front fork 19, a battery unit 20, a drive unit 22, a rear arm 24, a rear cushion 26, a vehicle body cover 28, and a seat 30.

The front wheel 11F comprises a wheel body 27F and a front wheel tire (tyre) 29F. The rear wheel 11R comprises a wheel body 27R and a rear wheel tire 29R.

The front fork 19 supports the front wheel 11F such that it is rotatable. Operating the handlebars 18 changes the direction of the front wheel 11F.

The vehicle body frame 12 supports the rear (swing) arm 24 such that it can swing in the top/bottom up/down direction. The rear arm 24 supports the rear wheel 11R such that it is rotatable. The rear cushion suspension/shock absorber 26 is located between the rear arm 24 and vehicle body frame 12. The drive unit 22 is provided on the rear arm 24. The drive unit 22 is located in the vicinity of the rear wheel 11R. That is, the electric motorcycle 10 has a so-called unit-swing driving structure.

As shown in Figure 1, the vehicle body frame 12 supports the battery unit 20. The battery unit 20 includes a battery (not shown), a battery case 62 containing the battery, and a controller 68. Electric power stored in the battery is supplied to the drive unit 22 via the controller 68. This drives the drive unit 22.

The drive unit 22 includes a motor 32. Driving power from the drive unit 22 is transmitted to the rear wheel 11R. This rotates the rear wheel 11R.

The vehicle body frame 12 supports the vehicle body cover 28. The vehicle body cover 28 covers part of the vehicle body frame 12 in a side view of the vehicle.

The vehicle body frame 12 supports the seat 30. The seat 30 is located above the vehicle body frame 12.

### Drive Unit

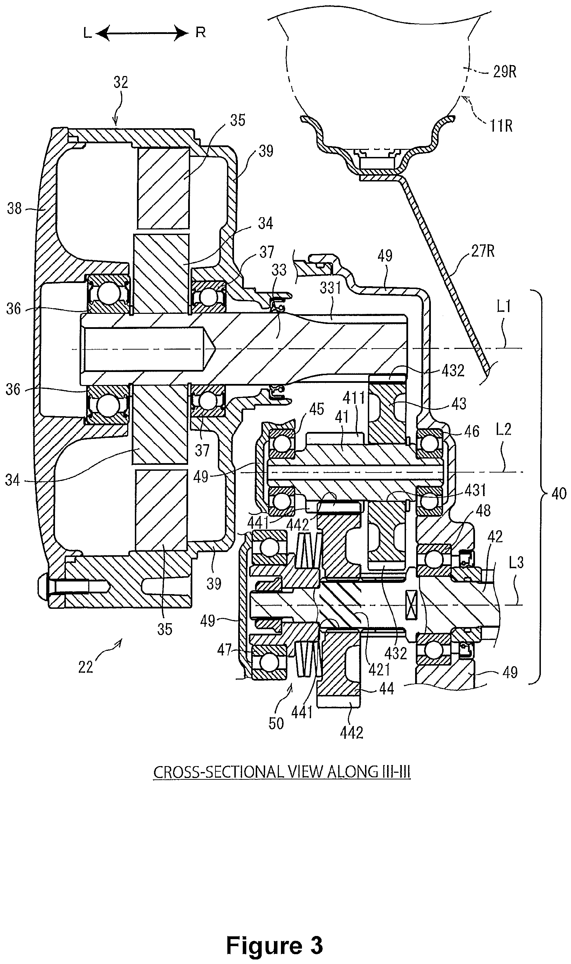

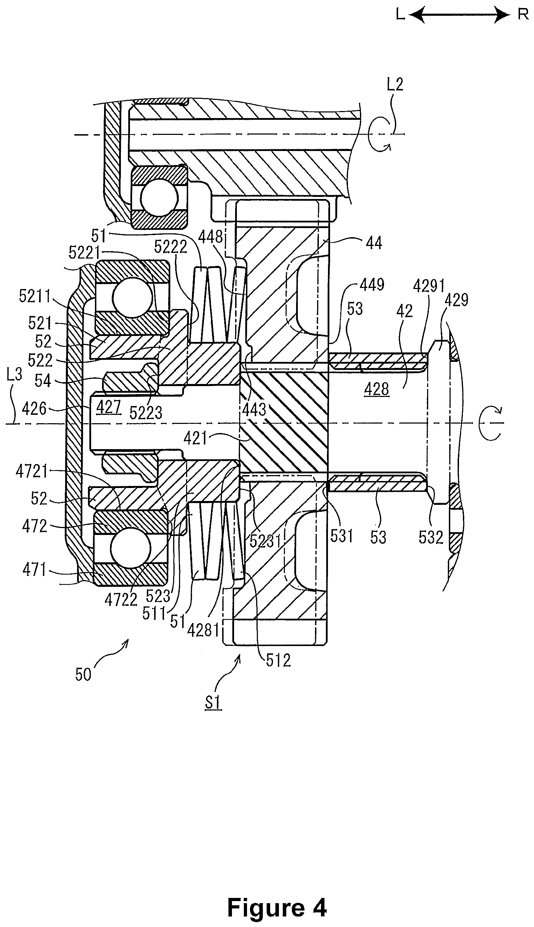

Figure 2 is a left side view of the drive unit 22. Figure 3 is a cross-sectional view of the drive unit 22 taken along line III-III of Figure 2. In Figure 3, arrow R indicates the right direction with respect to the electric motorcycle 10, while arrow L indicates the left direction with respect to the electric motorcycle 10 (the same applies to Figures 4 to 7 below). The drive unit 22 will be described with reference to Figures 2 and 3. As shown in Figure 3, the drive unit 22 includes the motor 32 and a power transmission mechanism 40.

### Motor

As shown in Figure 3, the motor 32 comprises a motor shaft 33, a rotor 34, a stator 35, a bearing 36, a bearing 37, a first motor case portion 38, and a second motor case portion 39.

The motor shaft 33 is positioned with a shaft center thereof coincident or consistent with an axis L1 extending in the left/right direction. The bearing 36 is located between the motor shaft 33 and first motor case portion 38. The bearing 37 is located between the motor shaft 33 and second motor case portion 39. Thus, the motor shaft 33 is supported on the first and second motor case portions 38 and 39 by means of the bearings 36 and 37, and is rotatable about the axis L1. As the motor 32 rotates, the motor shaft 33 rotates in the forward direction.

The rotor 34 is cylindrical in shape. The rotor 34 is positioned around the motor shaft 33. Similar to the motor shaft 33, the rotor 34 is positioned with its shaft center consistent with the axis L1. The rotor 34 is rotatable together with the motor shaft 33 about the axis L1.

The stator 35 is cylindrical in shape. The stator 35 is positioned around the rotor 34. Similar to the motor shaft 33 and rotor 34, the stator 35 is positioned with a shaft center thereof coincident or consistent with the axis L1. The stator 35 is fixed to the second motor case portion 39. Although not shown, the stator 35 comprises a stator body and a plurality of cores, for example.

The first motor case portion 38 is generally circular in shape in side view. The second motor case portion 39 is generally cylindrical in shape with a height thereof oriented in the left/right direction. The second motor case portion 39 has an open left portion. The first motor case portion 38 is fitted into the opening of the second motor case portion 39. The second motor case portion 39 has a right portion that is circular in side view. The circular right portion of the second motor case portion 39 has a hole at a center thereof. The motor shaft 33 extends through the hole in the right portion of the second motor case portion 39. As shown in Figure 3, in a space defined by the second motor case portion 39 and the first motor case portion 38 are positioned a left portion of the motor shaft 33, the rotor 34, the stator 35 and the bearings 36 and 37.

### Power Transmission Mechanism

As shown in Figures 2 and 3, the power transmission mechanism 40 comprises the motor shaft 33 of the motor 32, an intermediate shaft 41, a rear wheel shaft (or driving shaft) 42, a first gear 43, and a second gear 44. The power transmission mechanism 40 receives driving power produced by the rotation of the motor 32 and transmits such to the rear wheel shaft 42 via the intermediate shaft 41. Driving power produced by the rotation of the motor 32 is transmitted to the rear wheel shaft 42 with torque thereof amplified.

### Motor Shaft

As discussed above, the motor shaft 33 constitutes a part of the motor 32. As shown in Figure 3, the left portion of the motor shaft 33 is located in the space defined by the first and second motor case portions 38 and 39 of the motor 32. The motor shaft 33 extends through the second motor case portion 39. The motor shaft 33 has a right portion protruding toward the right of the motor 32. A plurality of gear grooves 331 extending parallel to each other are provided on the surface of the right portion of the motor shaft 33. The gear grooves 331 extend parallel to the axis L1.

### Intermediate Shaft

As shown in Figures 2 and 3, the intermediate shaft 41 is positioned with a shaft center thereof coincident or consistent with an axis L2 extending in the left/right direction. As shown in Figure 3, the intermediate shaft 41 is supported on the housing 49 by means of bearings 45 and 46. The bearings 45 and 46 make the intermediate shaft 41 rotatable about the axis L2. A plurality of gear grooves 411 extending parallel to each other are provided on a portion of the surface of the intermediate shaft 41. The gear grooves 411 extend parallel to the axis L2.

The first gear 43 is attached to the intermediate shaft 41. The first gear 43 is annular in shape. The inner periphery 431 of the first gear 43 is fixed to the surface of the intermediate shaft 41. Gear grooves may be provided on the inner periphery 431 of the first gear 43 and spline grooves may be provided on the surface of the intermediate shaft 41, in which case the gear grooves may engage the spline grooves to fix the first gear 43 to the intermediate shaft 41.

A plurality of gear grooves 432 extending parallel to each other are provided on the outer periphery of the first gear 43. The gear grooves 432 extend parallel to the axis L2. The gear grooves 432 engage the gear grooves 331 on the surface of the motor shaft 33. Thus, as the motor shaft 33 rotates in the forward direction, the first gear 43 rotates in the rearward direction. That is, as the motor shaft 33 rotates in the forward direction, the intermediate shaft 41 rotates in the rearward direction.

### Rear Wheel Shaft

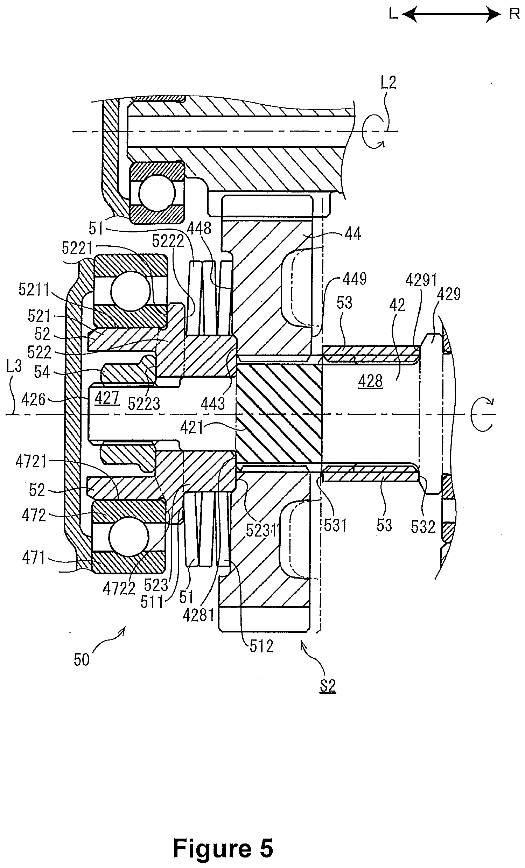

As shown in Figures 2 and 3, the rear wheel shaft 42 is positioned with a shaft center thereof coincident or consistent with an axis L3 extending in the left/right direction. As shown in Figure 3, the rear wheel shaft 42 is supported on the housing 49 by means of bearings 47 and 48. The bearings 47 and 48 make the rear wheel shaft 42 rotatable about the axis L3. A plurality of spline grooves 421 extending parallel to each other are provided on a portion of the surface of the rear wheel shaft 42. The spline grooves 421 are inclined relative to the axis L3. For convenience, Figure 3 shows the area where the spline grooves 421 are coupled to the second gear 44 as a line parallel to the axis L3 (such portions are shown in Figures 4 and 5 in a similar manner).

The wheel body 27R shown in Figure 3 is fixed to the rear wheel shaft 42 (the fixed portions are not shown). The wheel body 27R is positioned with a shaft center coincident or consistent with the axis L3. The rear wheel shaft 42 is fixed to the center of the wheel body 27R. Thus, the wheel body 27R can rotate in synchronization with the rotation of the rear wheel shaft 42. That is, the rear wheel 11R can rotate in synchronization with the rotation of the rear wheel shaft 42.

The second gear 44 is attached to the rear wheel shaft 42. The second gear 44 is annular in shape. A plurality of spline grooves 441 extending parallel to each other are provided on the inner periphery of the second gear 44. The spline grooves 441 are inclined relative to the axis L3. As discussed further below, the spline grooves 441 engage the spline grooves 421 on the rear wheel shaft 42.

A plurality of gear grooves 442 extending parallel to each other are provided on the outer periphery of the second gear 44. The gear grooves 442 extend parallel to the axis L3. The gear grooves 442 engage the gear grooves 411 on the surface of the intermediate shaft 41. Thus, as the intermediate shaft 41 rotates in the rearward direction, the second gear 44 rotates in the forward direction. That is, as the motor shaft 33 rotates in the forward direction, the intermediate shaft 41 rotates in the rearward direction and the rear wheel shaft 42 rotates in the forward direction.

### Mechanism for Tolerating Rotation Phase Difference

A mechanism for tolerating a rotation phase difference, 50, is provided around the location where the spline grooves 421 on the rear wheel shaft 42 engage the spline grooves 441 on the second gear 44. Figure 4 is an enlarged view of the mechanism 50 for tolerating a rotation phase difference of Figure 3. Figure 4 shows a first state S1 of the mechanism 50 for tolerating a rotation phase difference. As shown in Figure 4, the mechanism 50 for tolerating a rotation phase difference is made up of the rear wheel shaft 42, the second gear 44, a member 52, a member 53, a member 54, and an elastic member 51. Figure 5 shows a second state S2 of the mechanism 50 for tolerating a rotation phase difference. The mechanism 50 for tolerating a rotation phase difference can be switched between the first state S1 shown in Figure 4 and the second state S2 shown in Figure 5 depending on the travel condition of the elastic motorcycle 10.

### Rear Wheel Shaft

As shown in Figure 4, a portion of the rear wheel shaft 42 that comprises a left end surface 426 thereof constitutes a first portion 427. A portion of the rear wheel shaft 42 that is connected to the first portion 427 constitutes a second portion 428, while a portion thereof that is connected to the second portion 428 constitutes a third portion 429. In Figure 4, the borders between the first, second and third portions 427, 428 and 429 are shown by chain lines.

The diameter of a cross-section of the first portion 427 perpendicular to the axis L3 is smaller than the diameter of the second portion 428. Thus, as the first and second portions 427 and 428 are connected, portions of the left side of the second portion 428 are exposed to form an annular step 4281. Further, the diameter of a cross-section of the second portion 428 perpendicular to the axis L3 is smaller than the diameter of the third portion 429. Thus, as the second and third portions 428 and 429 are connected, portions of the left side of the third portion 429 are exposed to form an annular step 4291.

The annular member 52 is attached to the rear wheel shaft 42 and is located to the left of the second gear 44. The annular member 53 is attached to the rear wheel shaft 42 and is located to the right of the second gear 44. The annular member 54 is attached to the rear wheel shaft 42 and is located to the left of the member 52. The members 52, 53 and 54 are positioned with shaft centers thereof coincident or consistent with the axis L3. The members 52, 53 and 54 rotate together with the rear wheel shaft 42 about the axis L3.

### Member 52

As shown in Figure 4, the member 52 is made up of a left portion 521, an intermediate portion 522 and a right portion 523. The left, intermediate and right portions 521, 522 and 523 are integrally formed. The left, intermediate and right portions 521, 522 and 523 are annular in shape. The inner peripheries of the intermediate and right portions 522 and 523 of the member 52 are fixed to the rear wheel shaft 42. The member 52 is fixed to the rear wheel shaft 42 as it is tightened up by the member 54 by clearance fitting.

The left portion 521 of the member 52 constitutes a left portion of the member 52. The outer periphery 5211 of the left portion 521 is fixed to the bearing 47. The bearing 47 includes an outer ring 471 and an inner ring 472. The outer periphery 5211 of the left portion 521 is fixed to the inner periphery 4721 of the inner ring 472 of the bearing 47. The left portion 521 is fixed to the inner ring 472 by clearance fitting.

The right portion 523 of the member 52 constitutes a right portion of the member 52. The right side 5231 of the right portion 523 is in contact with the step 4281 on the rear wheel shaft 42.

The elastic member 51 is attached to the outer periphery of the right portion 523 of the member 52. The elastic member 51 will be described in detail further below.

The intermediate portion 522 of the member 52 is a structure between the left and right portions 521 and 523. The outer diameter of a cross section of the intermediate portion 522 perpendicular to the axis L3 is larger than the outer diameter of a cross section of the left portion 521. Thus, as the left and intermediate portions 521 and 522 are connected, a left side 5221 of the intermediate portion 522 is formed. The left side 5221 of the intermediate portion 522 is in contact with the right side 4722 of the inner ring 472.

The inner diameter of a cross-section of the intermediate portion 522 perpendicular to the axis L3 is smaller than the inner diameter of a cross-section of the left portion 521. Thus, as the left and intermediate portions 521 and 522 are connected, a left side 5223 of the intermediate portion 522 is formed.

Further, the outer diameter of a cross-section of the intermediate portion 522 perpendicular to the axis L3 is larger than the outer diameter of a cross-section of the right portion 523. Thus, as the right and intermediate portions 523 and 522 are connected, a right side 5222 of the intermediate portion 522 is formed.

### Member 54

As shown in Figure 4, the inner periphery 542 of the member 54 is fixed to the surface of the rear wheel shaft 42. The member 54 is fixed to the rear wheel shaft 42 by means of a thread. The right side 541 of the member 54 is in contact with the left side 5223 of the intermediate portion 522. As the member 54 is located generally to the left of the member 52, the member 52 is sandwiched between the step 4281 of the rear wheel shaft 42 and the member 54, thereby restricting its movement in the direction of the axis L3.

### Member 53

As shown in Figure 4, the member 53 is located to the right of the second gear 44. The member 53 is fixed to the rear wheel shaft 42 by means of spline grooves. The right side 532 of the member 53 is in contact with the step 4291 of the rear wheel shaft 42.

The distance between the right side 5231 of the right portion 523 of the member 52 and the left side 531 of the member 53 is larger than the size of the second gear 44 as measured in the direction of the axis L3. Thus, the second gear 44 is movable in the direction of the axis L3 between the members 52 and 53.

### Elastic Member

As discussed above, as shown in Figure 4, the elastic member 51 is located on the outer periphery of the right portion 523 of the member 52. The elastic member 51 is annular in shape. The elastic member 51 can be extended and contracted in the direction of the axis L3. The elastic member 51 may be a disc spring, for example.

The left end 511 of the elastic member 51 is in contact with the right side 5222 of the intermediate portion 522 of the member 52. The right end 512 of the elastic member 51 is in contact with the left side 448 of the second gear 44. The left end 511 of the elastic member 51 may be fixed to the right side 5222 of the intermediate portion 522 by an adhesive, for example. The right end 512 of the elastic member 51 may be fixed to the left side 448 of the second gear 44 by an adhesive, for example.

When no external force is applied to the elastic member 51, the right side 449 of the second gear 44 is in contact with the left side 531 of the member 53, as shown in Figure 4. This state will be referred to as first state S1. When a force toward the left is applied by the second gear 44 to the elastic member 51, the elastic member 51 is contracted such that the left side 443 of the second gear 44 is close to the right side 5231 of the right side 523 of the member 52. This state will be referred to as second state S2. In the second state S2, the component of the rotating force from the second gear 44 that is in the direction of the axis L3 and the elastic force of the elastic member 51 are opposite to each other and have an equal magnitude, i.e. they are in balance. In reality, the distance between the left side 443 of the second gear 44 and the right side 5231 of the right portion 523 of the member 52 is very small, and, in view of this, Figure 5 shows the left side 443 of the second gear 44 and the right side 5231 of the right portion 523 as in contact with each other.

### Spline Grooves

As shown in Figure 4, as discussed above, a plurality of spline grooves 421 are provided on the portions of the surface of the second portion 428 of the rear wheel shaft 42 that are located between the right side 5231 of the right portion 523 of the member 52 and the left side 531 of the member 53. The spline grooves 421 are inclined at an angle relative to the axis L3. The inclination angle of the spline grooves 421 relative to the shaft L3 may be in the range of 40 to 50 degrees, for example. As viewed from above the rear wheel shaft 42, the spline grooves 421 are disposed such that their left ends are located forward of their right ends.

A plurality of spline grooves 441 are provided on the inner periphery of the second gear 44. The spline grooves 441 are inclined at the same angle relative to the axis L3 as the spline grooves 421 on the rear wheel axis 42.

### Operation of Mechanism for Tolerating Rotation Phase Difference: Electric Motorcycle Standing Still

When the electric motorcycle 10 is standing still, the elastic member 51 is located at the rightmost position, as shown in Figure 4. This state will be referred to as first state S1.

When the rider operates the vehicle such that the motor 32 produces driving power, this driving power is transmitted to the rear wheel shaft 42 via the power transmission mechanism 40, thereby rotating the rear wheel 11R. More specifically, when the motor 32 produces driving power, the first gear 43 rotates in the rearward direction in synchronization with the rotation of the motor shaft 33 in the forward direction. Further, the rotation of the first gear 43 causes the intermediate shaft 41 fixed to the first gear 43 to rotate in the rearward direction. Further, the rotation of the intermediate shaft 41 in the rearward direction causes the second gear 44 to rotate in the forward direction. When the second gear 44 rotates in the forward direction, the rotating force of the second gear 44 is transmitted to the rear wheel shaft 42.

### Operation of Mechanism for Tolerating Rotation Phase Difference: Electric Motorcycle Beginning to Travel

The rotating force of the second gear 44 is transmitted to the rear wheel shaft 42 via the mechanism 50 for tolerating a rotation phase difference. In the mechanism 50 for tolerating a rotation phase difference, the rear wheel shaft 42 and second gear 44 engage each other by means of the spline grooves 421 and 441 inclined relative to the axis L3 such that the rotating force of the second gear 44 is applied to the rear wheel shaft 42 in a direction inclined relative to the shaft. Thus, a part of the rotating force of the second gear 44 is transmitted to the rear wheel shaft 42 as a force causing the second gear 44 to move in the direction of the axis L3 toward the left, and the remaining rotating force is transmitted thereto as a force causing the rear wheel shaft 42 to rotate about the axis L3.

The power transmission mechanism 40 includes the elastic member 51 which produces an elastic force pushing the second gear 44 toward the right. When the motor 32 begins to drive the mechanism, a part of the rotating force of the second gear 44 is transmitted to the shaft as a force causing the second gear 44 to move in the direction of the axis L3 toward the left such that the elastic member 51 is pushed by the second gear 44 toward the left, thereby increasing its elastic force. When the elastic force of the elastic member 51 increases, part of the rotating force of the second gear 44 (i.e. rotating force acting in an axial direction) and the elastic force of the elastic member 51 are eventually brought into balance such that the second gear 44 and rear wheel shaft 42 do not move any more relative to each other in an axial direction. The state at this moment is the second state S2 shown in Figure 5. After the second gear 44 has reached the second state S2, the rotating force of the second gear 44 is transmitted as a force causing the rear wheel shaft 42 to rotate about the axis L3.

### Operation of Mechanism for Tolerating Rotation Phase Difference: Speed of Rotation of Rear Wheel Changes

When the electric motorcycle 10 is moving or travelling, in the drive unit 22, the second gear 44 and elastic member 51 are in the second state S2 shown in Figure 5, as discussed above. It is now assumed that, when the electric motorcycle 10 is travelling, irregularities on the ground, for example, have caused the rear wheel 11R to leave the ground. When the rear wheel 11R leaves the ground, the friction force received by the rear wheel 11R from the ground during travelling becomes zero. This causes the rear wheel 11R to slip. Further, when the friction force received by the rear wheel 11R from the ground becomes zero, the second gear 44 only needs a smaller force to rotate the rear wheel shaft 42, and its force pushing the elastic member 51 decreases to that extent. Then, the elastic force of the elastic member 51 advantageously causes the second gear 44 to move toward the right. That is, the second gear 44 beneficially transitions from the second state S2 to the first state S1.

When the rear wheel 11R, being away from the ground, lands on the ground once again, then, the friction force and other forces produced between the ground and rear wheel 11R causes the rear wheel 11R to be loaded all of a sudden. At this moment, due to this sudden load on the rear wheel 11R, the rear wheel 11R may stop rotating temporarily. When the halt of the rotation of the rear wheel 11R suddenly stops the axial rotation of the rear wheel shaft 42, then, the engagement of the spline grooves 421 and 441 advantageously causes only the second gear 44 to move to the left. That is, the second gear 44 beneficially transitions from the first state S1 to the second state S2. At this moment, as the second gear 44 moves in the direction of the axis L3, there is a phase difference between the rotation of the rear wheel 11R and the rotation of the motor 32. Thus, there is a time lag between the time at which the effect of the load applied to the rear wheel 11R (that is, temporary halt of the rear wheel shaft 42) occurs and the time at which this effect affects the driving of the motor 32 (that is, rotation of the second gear 44). During this time lag, the motorcycle 10 travels forward due to inertia. This removes the temporary halt of the rear wheel shaft 42, which starts to rotate once again.

After the second gear 44 has transitioned to the second state S2 and the rear wheel shaft 42 has started to rotate once again, the power transmission mechanism 40 of the drive unit 22 and the mechanism 50 for tolerating a rotation phase difference operate in the same manner as during normal travelling.

### Effects of First Embodiment

When a conventional electric motorcycle hits an obstacle, for example, and the rear wheel leaves the ground and then the rear wheel lands on the ground once again, which causes a sudden load on the rear wheel, and the effect of the load on the rear wheel is directly transmitted to the second gear and then to the motor, an overcurrent may flow in the rotor of the motor. As an overcurrent flows in the rotor, the motor may be temporarily uncontrollable.

In contrast, as described above under the heading "Operation of Mechanism for Tolerating Rotation Phase Difference", in the present embodiment, the power transmission mechanism 40 operates in the following manner when the electric motorcycle 10 hits an obstacle, for example, and the rear wheel 11R leaves the ground: when the rear wheel 11R leaves the ground and then the rear wheel 11R lands on the ground once again and the rear wheel shaft 42 stops temporarily, there is a time lag between the time at which the effect of the load applied to the rear wheel 11R (that is, temporary halt of the rear wheel shaft 42) occurs and the time at which this effect affects the driving of the motor 32 (that is, rotation of the second gear 44). Thus, the power transmission mechanism 40 in the present embodiment uses the mechanism 50 for tolerating a rotation phase difference described above to prevent overcurrent in the motor 32.

In the present embodiment, the mechanism 50 for tolerating a rotation phase difference is located in the area where the second gear 44 and rear wheel shaft 42 exchange rotating forces. In the power transmission mechanism 40, torque increases as it goes from the motor shaft 33 toward the rear wheel shaft 42. The large torque of rotating forces exchanged by the second gear 44 and rear wheel shaft 42 makes it possible to reduce the distance by which the second gear 44 moves in the direction of the axis L3. This reduces the size of the drive unit 22 as measured in the left/right direction.

In the present embodiment, an intermediate shaft 41 is provided between the motor shaft 33 and rear wheel shaft 42. The torque of driving power increases as the driving power is transmitted from the motor shaft 33 to the intermediate shaft 41, and the torque further increases as the driving power is transmitted from the intermediate shaft 41 to the rear wheel shaft 42, thereby increasing the efficiency with which torque is amplified. This makes it possible to reduce the size of the drive unit 22 as measured in the left/right direction.

In the present embodiment, the elastic member 51 is a disc spring. Due to the large elastic modulus of a disc spring, the member has a large elastic force even if elastic deformation is small. Thus, a disc spring with a large elastic modulus is suitable in the rear wheel shaft 42 which exchanges driving power with a large torque.

In the present embodiment, the spline grooves 421 on the rear wheel shaft 42 and the spline grooves 441 on the second gear 44 are inclined, for example, at an angle ranging from 40 to 50 degrees; thus, part of the driving power transmitted to the rear wheel shaft 42 from the second gear 44 can be efficiently directed to an axial direction of the rear wheel shaft 42. Further, in the second state S2 shown in Figure 5, all of the rotating force of the second gear 44 may be transmitted as a force for rotating the rear wheel shaft 42 about the axis L3; even then, the rotating force is transmitted from the second gear 44 to the rear wheel shaft 42 with good transmission efficiency since the spline grooves 421 and 441 are inclined at an angle ranging from 40 to 50 degrees.

### Variation of First Embodiment

The above embodiment describes that the right side 449 of the second gear 44 is in contact with the left side 531 of the member 53 when the mechanism is in the first state S1 shown in Figure 4; however, the right side 449 of the second gear 44 need not be in contact with the left side 531 of the member 53. If the position of the second gear 44 in the first state S1 is to the right of the position thereof in the second state S2, it is possible to ensure that the state in which the elastic member 51 is at its natural length is represented by the first state S1 even if the right side 449 of the second gear 44 is not in contact with the left side 531 of the member 53.

Further, the above embodiment describes that the left side 443 of the second gear 44 is in contact with the right side 5231 of the right portion 523 of the member 52 when the mechanism is in the second state S2 shown in Figure 5; however, the left side 443 of the second gear 44 need not be in contact with the right side 5231 of the right portion 523. If the position of the second gear 44 in the second state S2 is to the left of the position thereof in the first state S1, it is possible to ensure that the state in which the elastic force of the elastic member 51 is in balance with part of the rotating force of the second gear 44 (i.e. component in the direction of the axis L3) is represented by the second state S2.

The above embodiment describes that the elastic member 51 is a disc spring; however, the type of the elastic member 51 is not limited to disc spring. For example, the elastic member 51 may be a coil spring. However, the elastic member 51 is preferably a disc spring to minimize the size of the drive unit 22 as measured in the left/right direction.

### SECOND EMBODIMENT

An electric motorcycle in according to a second embodiment will be described below. The overall construction of the electric motorcycle of the second embodiment is the same as that of the electric motorcycle 10 of the first embodiment. In the electric motorcycle of the second embodiment, a drive unit 22A has a different construction from that of the drive unit 22 of the first embodiment.

### Drive Unit

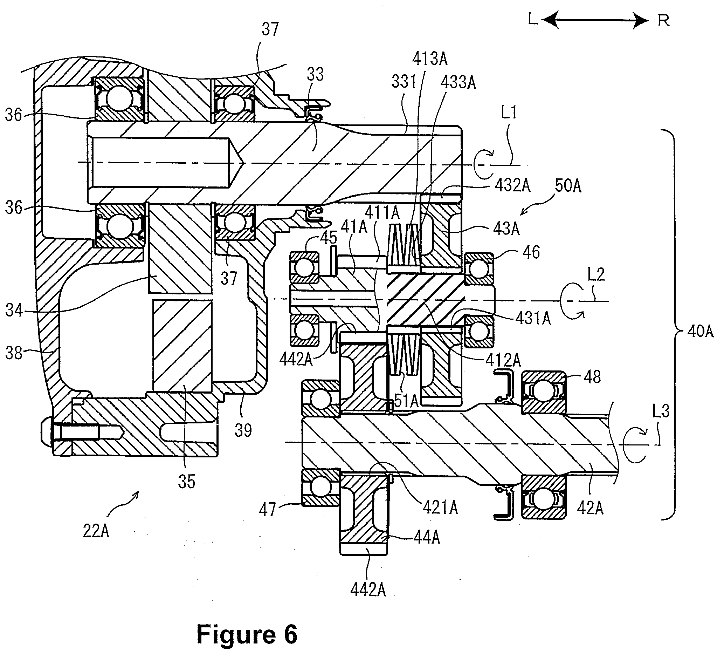

Figure 6 shows the drive unit 22A of the second embodiment. Similar to the drive unit 22 of the first embodiment, the drive unit 22A comprises a motor 32 and a power transmission mechanism 40A. The motor 32 has the same construction as in the first embodiment.

### Power Transmission Mechanism

Similar to the mechanism of the first embodiment, the power transmission mechanism 40A comprises a motor shaft 33 of the motor 32, an intermediate shaft 41A, a rear wheel shaft (driving shaft) 42A, a first gear 43A, and a second gear 44A. Figure 6 shows a cross-section of the drive unit 22A that includes an axis L1 which represents the shaft center of the motor shaft 33, an axis L2 which represents the shaft center of the intermediate shaft 41A and an axial L3 which represents the shaft center of the rear wheel shaft 42A.

While the mechanism 50 for tolerating a rotation phase difference in the first embodiment is constructed on the rear wheel shaft 42, a mechanism 50A for tolerating a rotation phase difference in the second embodiment is constructed on the intermediate shaft 41A. The mechanism 50A for tolerating a rotation phase difference will be described below. As shown in Figure 6, the mechanism 50A for tolerating a rotation phase difference is made up of the intermediate shaft 41A, the first gear 43A and an elastic member 51A. Figure 6 shows the mechanism 50A for tolerating a rotation phase difference in a state found when the motor 32 is not rotating.

### Intermediate Shaft

As shown in Figure 6, gear grooves 411A are provided on a left portion of the intermediate shaft 41A. The gear grooves 411A engage gear grooves 442A provided on the outer periphery of the second gear 44A.

Spline grooves 412A are provided on the intermediate shaft 41A and located to the right of the gear grooves 411A. The spline grooves 412A will be described further below. For convenience, Figure 6 shows the area where the spline grooves 421A are coupled to the first gear 43A as a line parallel to the axis L2.

### First Gear

The first gear 43A has a plurality of gear grooves 431A on an outer periphery thereof. As shown in Figure 6, the gear grooves 431A engage the gear grooves 331 on the motor shaft 33.

A plurality of gear grooves 431A are provided on the inner periphery of the first gear 43A. The gear grooves 431A engage the spline grooves 412A on the intermediate shaft 41A. The gear grooves 431A will be described further below.

### Elastic Member

The elastic member 51A is disposed around the intermediate shaft 41A. The elastic member 51A is positioned such that it can be extended and contracted in the direction of the axis L2. The elastic member 51A is a disc spring. The elastic member 51A is located between the right side 413A of the gear groove 411A portion and the left side 433A of the first gear 43A. The left end of the elastic member 51A is in contact with the right side 413A of the gear groove 411A portion. The right end of the elastic member 51A is in contact with the left side 433A of the first gear 43A.

### Spline Grooves

As discussed above, a plurality of spline grooves 412A are provided on the intermediate shaft 41A. The spline grooves 412A are inclined at an angle relative to the axis L2. The inclination angle of the spline grooves 412A relative to the axis L2 may be in the range of 40 to 50 degrees, for example. As viewed from above the intermediate shaft 41A, the spline grooves 412A are disposed such that their left ends are located forward of their right ends.

Further, as discussed above, a plurality of gear grooves 431A are provided on the inner periphery of the first gear 43A. The gear grooves 431A are inclined at the same angle relative to the axis L2 as the spline grooves 412A on the intermediate shaft 41A.

### Rear Wheel Shaft

In the second embodiment, no mechanism for tolerating a rotation phase difference is provided on the rear wheel shaft 42A. Thus, spline grooves 421A extending parallel to the axis L3 are provided on the rear wheel shaft 42A. The spline grooves 421A engage spline grooves provided on the inner periphery of the second gear 44A.

### Operation of Mechanism for Tolerating Rotation Phase Difference

The operation of the mechanism 50A for tolerating a rotation phase difference is the same as the operation of the mechanism 50 for tolerating a rotation phase difference in the first embodiment except that the rear wheel shaft 42 is changed to the intermediate shaft 41A, the second gear 44 is changed to the first gear 43A, and the elastic member 51 is changed to the elastic member 51A.

### Effects of Second Embodiment

The power transmission mechanism 40A in the present embodiment operates in the following manner when the electric motorcycle hits an obstacle, for example, and the rear wheel 11R leaves the ground: when the rear wheel 11R leaves the ground and then the rear wheel 11R lands on the ground once again and the rear wheel shaft 42A stops temporarily, there is a time lag between the time at which the effect of the load applied to the rear wheel 11R (that is, temporary halt of the rear wheel shaft 42A and intermediate shaft 41A) occurs and the time at which this effect affects the driving of the motor 32 (that is, rotation of the first gear 43A). Thus, the power transmission mechanism 40A in the present embodiment uses the mechanism 50A for tolerating a rotation phase difference described above to prevent overcurrent in the motor 32.

### THIRD EMBODIMENT

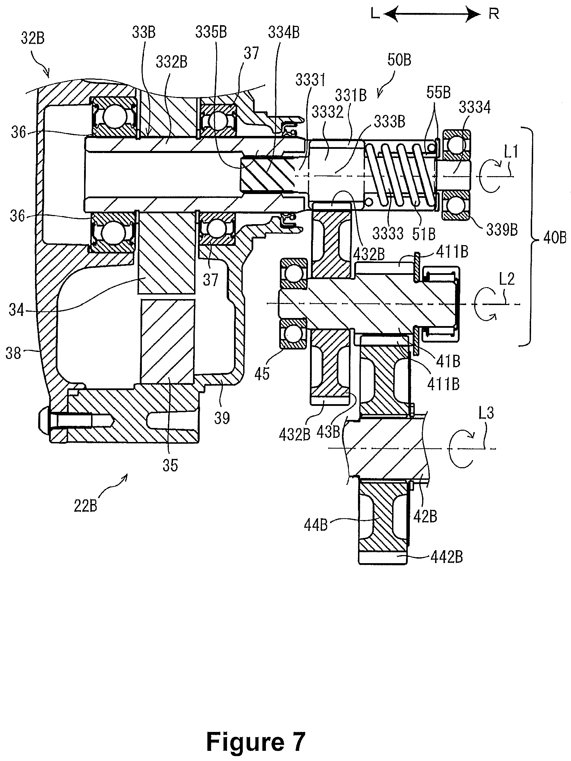

An electric motorcycle according to a third embodiment will be described below. The overall construction of the electric motorcycle of the third embodiment is the same as that of the electric motorcycle 10 of the first embodiment. Figure 7 shows a drive unit 22B of the third embodiment. In the electric motorcycle of the third embodiment, the drive unit 22B has a different construction from that of the drive unit 22 of the first embodiment.

### Power Transmission Mechanism

As shown in Figure 7, the power transmission mechanism 40B includes a motor shaft 33B of a motor 32B, an intermediate shaft 41B, a rear wheel shaft (driving shaft) 42B, a first gear 43B, and a second gear 44B. Figure 7 shows a cross-section of the drive unit 22B that includes an axis L1 which represents the shaft center of the motor shaft 33B, an axis L2 which represents the shaft center of the intermediate shaft 41B, and an axis L3 which represents the shaft center of the rear wheel shaft 42B.

### Motor Shaft

The motor shaft 33B is made up of a first motor shaft portion 332B and a second motor shaft portion 333B. The first motor shaft portion 332B is positioned with a shaft center thereof coincident or consistent with the axis L1. The first motor shaft portion 332B has an annular cross-section perpendicular to the axis L1. That is, the first motor shaft portion 332B has a columnar hole extending therethrough in the direction of the shaft center. The greater part of the first motor shaft portion 332B is located within the space defined by the first and second motor case portions 38 and 39 of the motor 32. A plurality of spline grooves 335B are provided on the inner periphery of a right portion of the first motor shaft portion 332B.

The second motor shaft portion 333B is positioned with a shaft center thereof coincident or consistent with the axis L1. The second motor shaft portion 333B is made up of a first portion 3331, a second portion 3332, a third portion 3333 and a fourth portion 3334. The first portion 3331 includes the left end surface of the second motor shaft portion 333B. The second portion 3332 is connected to the first portion 3331 and is located to the right of the first portion 3331. The third portion 3333 is connected to the second portion 3332 and is located to the right of the second portion 3332. The fourth portion 3334 is connected to the third portion 3333 and is located to the right of the third portion 3333. The fourth portion 3334 includes the right end surface of the second motor shaft portion 332B.

The first portion 3331 is inserted into the hole of the first motor shaft portion 332B through its right end. Spline grooves 334B are provided on the outer periphery of the first portion 3331. The spline grooves 334B will be described further below.

A plurality of gear grooves 331B are provided on the second portion 3332. The gear grooves 331B extend parallel to each other. The gear grooves 331B extend parallel to the axis L1.

An annular metal part 55B is fixed to the outer periphery of the third portion 3333 to cover the outer periphery. The metal part 55B is pushed into the third portion 3333. Portions of the metal part 55B located adjacent the right end of the third portion 3333 are bent along a plane perpendicular to the axis L1 to expand away from the axis L1. An elastic member 51B, described further below, is attached to the outer periphery of the third portion 3333.

A bearing 339B is pushed into the fourth portion 3334. The outer ring of the bearing 339B is fixed to the housing 49 (not shown in Figure 7; see Figure 3).

### Intermediate Shaft

As shown in Figure 7, the intermediate shaft 41B is positioned with its shaft center thereof coincident or consistent with the axis L2. The first gear 43B is fixed to the intermediate shaft 41B. The first gear 43B is pushed into the intermediate shaft 41B.

A plurality of gear grooves 432B are provided on the outer periphery of the first gear 43B. The gear grooves 432B extend parallel to each other. The gear grooves 432B extend in the direction of the axis L2. The gear grooves 432B engage the gear grooves 331B provided on the second portion 3332 of the second motor shaft portion 333B.

A plurality of gear grooves 411B are provided on the outer periphery of the intermediate shaft 41B. The gear grooves 411B extend parallel to each other. The gear grooves 411B extend in the direction of the axis L2. The gear grooves 411B are located to the right of the portion of the shaft to which the first gear 43B is attached.

### Rear Wheel Shaft

The construction of the rear wheel shaft 42B is the same as that of the rear wheel shaft 42A in the second embodiment shown in Figure 6. The rear wheel shaft 42B is positioned with a shaft center thereof coincident or consistent with the axis L3. The second gear 44B is fixed to the rear wheel shaft 42B. A plurality of gear grooves 442B are provided on the outer periphery of the second gear 44B. The gear grooves 442B engage the gear grooves 411B on the intermediate shaft 41B.

In the power transmission mechanism 40B, the motor 32B drives the motor shaft 33B to cause the shaft to rotate in the forward direction. The rotation of the motor shaft 33B in the forward direction is transmitted to the first gear 43B in the form of rotation in the rearward direction. As the first gear 43B rotates in the rearward direction, the intermediate shaft 41B rotates in the rearward direction. The rotation of the intermediate shaft 41B in the rearward direction is transmitted to the second gear 44B in the form of rotation in the forward direction. As the second gear 44B rotates in the forward direction, the rear wheel shaft 42B rotates in the forward direction, causing the electric motorcycle 10 to advance.

### Mechanism for Tolerating Rotation Phase Difference

While the mechanism 50 for tolerating a rotation phase difference in the first embodiment is constructed on the rear wheel shaft 42, a mechanism 50B for tolerating a rotation phase difference in the third embodiment is constructed on the motor shaft 33B. The mechanism 50B for tolerating a rotation phase difference will be described below. As shown in Figure 7, the mechanism 50B for tolerating a rotation phase difference is made up of the motor shaft 33B and an elastic member 51B. Figure 7 shows the mechanism 50B for tolerating a rotation phase difference in a state found when the motor 32B is not rotating. The construction of the motor shaft 33B is described above.

### Elastic Member

As discussed above, the elastic member 51B is disposed on the third portion 3333 of the second motor shaft portion 333B. The elastic member 51B is located between the right end of the gear groove 331B portion and the left side of the bent portion of the metal part 55B. The elastic member 51B is annular in shape. The elastic member 51B can be extended and contracted in the direction of the axis L1. The elastic member 51B may be a coil spring, for example.

### Spline Grooves

The spline grooves 334B provided on the first portion 3331 of the second motor shaft portion 333B are inclined at an angle relative to the axis L1. The inclination angle of the spline grooves 334B relative to the axis L1 may be in the range of 40 to 50 degrees, for example. As viewed from above the second motor shaft portion 333B, the spline grooves 334B are disposed such that their left ends are located forward of their right ends.

Further, as discussed above, a plurality of spline grooves 335B are provided on the inner periphery of the right portion of the first motor shaft portion 332B. The spline grooves 335B are inclined at the same angle relative to the axis L1 as the spline grooves 334B on the second motor shaft portion 333B. Thus, the spline grooves 335B engage the spline grooves 334B on the second motor shaft portion 333B. For convenience, Figure 7 shows the area where the spline grooves 334B and 335G are coupled to each other as a line parallel to the axis L1.

### Operation of Mechanism for Tolerating Rotation Phase Difference

When the electric motorcycle 10 is standing still, the elastic member 51B is at its natural length or has the minimum elastic force, as shown in Figure 7. When the motor 32B, standing still, starts to drive the vehicle, the rotation of the rotor 34 causes the first motor shaft portion 332B to rotate in the forward direction.

The rotating force of the first motor shaft portion 332B in the forward direction is transmitted to the second motor shaft portion 333B via the engagement of the spline grooves 335B and the spline grooves 334B on the second motor shaft portion 333B. Since the spline grooves 334B and 335B are inclined relative to the axis L1, part of the rotating force acts as a force causing the second motor shaft portion 333B to rotate in the forward direction, while the remaining rotating force acts as a component of the force causing the second motor shaft portion 333B to move to the right in the direction of the axis L1. Thus, the elastic member 51B is pushed by the right side of the second portion 3332 of the second motor shaft portion 333B so as to be contracted. When the magnitude of the part of the rotating force that causes the second motor shaft portion 333B to move to the right in the direction of the axis L1 and the elastic force of the elastic member 51B are in balance, the rotating force is used to rotating the second motor shaft portion 333B in the forward direction.

It is assumed that, when the electric motorcycle 10 is travelling, it has hit an obstacle, for example, causing the rear wheel 11R to leave the ground. When the rear wheel 11R leaves the ground, the friction force received by the rear wheel 11R from the ground during travelling becomes zero. This causes the rear wheel 11R to slip such that the speed of rotation rapidly increases. Further, when the friction force received by the rear wheel 11R from the ground becomes zero, the elastic member 51B causes the second motor shaft portion 333B to move toward the left. This decreases the elastic force of the elastic member 51B.

When the rear wheel 11R, being away from or off the ground, lands on the ground once again, then, the friction force and other forces produced between the ground and rear wheel 11R causes the rear wheel 11R to be loaded all of a sudden. At this moment, due to this sudden load on the rear wheel 11R, the rear wheel 11R may stop rotating temporarily. When the halt of the rotation of the rear wheel 11R suddenly stops the axial rotation of the rear wheel shaft 42B, intermediate shaft 41B and second motor shaft portion 333B, then, the engagement of the spline grooves 335B and 334B causes the second motor shaft portion 333B to move to the right. At this moment, as the second motor shaft portion 333B moves in the direction of the axis L1, there is a phase difference between the rotation of the rear wheel 11R and the rotation of the motor 32B. Thus, there is a time lag between the time at which the effect of the load applied to the rear wheel 11R (that is, temporary halt of the rear wheel shaft 42B, intermediate shaft 41B and second motor shaft portion 333B) occurs and the time at which this effect affects the driving of the motor 32 (that is, the first motor shaft portion 332B). During this time lag, the electric motorcycle 10 travels forward due to inertia. This removes the temporary halt of the rear wheel shaft 42B, intermediate shaft 41B and second motor shaft portion 333B, which starts to rotate once again.

### Effects of Third Embodiment

The power transmission mechanism 40B in the present embodiment operates in the following manner when the electric motorcycle hits an obstacle, for example, and the rear wheel 11R leaves the ground: when the rear wheel 11R leaves the ground and then the rear wheel 11R lands on the ground once again and the rear wheel shaft 42B stops temporarily, there is a time lag between the time at which the effect of the load applied to the rear wheel 11R (that is, temporary halt of the rear wheel shaft 42B, intermediate shaft 41B and second motor shaft portion 333B) occurs and the time at which this effect affects the driving of the motor 32 (that is, the first motor shaft portion 332B). Thus, the power transmission mechanism 40B in the present embodiment uses the mechanism 50B for tolerating a rotation phase difference described above to prevent overcurrent in the motor 32.

### Other Embodiments

The above embodiments describe that the drive unit 22 is located to the left of the rear wheel 11R; alternatively, the drive unit 22 may be located to the right of the rear wheel 11R.

The above embodiments describe that the power transmission mechanism includes a motor shaft, an intermediate shaft and a rear wheel shaft; however, the power transmission mechanism may not include an intermediate shaft. In such implementations, the rotating force of the motor shaft can be transmitted to the rear wheel shaft via gears. In implementations where the power transmission mechanism includes no intermediate shaft, the mechanism for tolerating a rotation phase difference may be provided on the rear wheel shaft, or provided on the motor shaft.

While preferred embodiments of the present invention have been described above, it will be understood that variations and modifications will be apparent to those skilled in the art without departing the scope of the present invention. The scope of the present invention, therefore, is to be determined solely by the appended claims.

It will be appreciated that the embodiments of the present invention hereinbefore described are given by way of example only, and are not intended to limit the scope of the invention in any way.

It will be appreciated that the term straddled electric vehicle includes: motorcycles and motorbikes as well as motor tricycles, quad-bikes and All Terrain Vehicles (ATVs), scooters and mopeds.

## Claims

1. A straddled electric vehicle (10) comprising:
a motor (32;32A;32B) comprising an electric motor;
a driving wheel (11R); and
a power transmission mechanism (40;40A;40B) having a plurality of shafts for transmitting driving power from the motor to the driving wheel,
the power transmission mechanism comprising:
a first shaft (42;41A);
a rotating member (44;43A) attached to the first shaft and being capable of exchanging a rotating force with the first shaft; and
an elastic member (51;51A;51B) capable of biasing one of the rotating member attached to the first shaft and the first shaft toward an axial direction, **characterised in that** the first shaft (42;41A) has spline gears (421) on a surface thereof, the spline gears (421) being inclined relative to an axial direction of the first shaft and the rotating member has spline gears (441) engageable with the spline gears (421) on the first shaft,
wherein the spline gears (421) on the first shaft are inclined so as to move the rotating member or the first shaft toward the other axial direction when the driving wheel is rotating in a direction causing the straddled electric vehicle to advance and the rotating member or the first shaft acts to maintain a speed of rotation of the driving wheel as the speed of rotation is decreasing.

2. The straddled electric vehicle according to claim 1, wherein the rotating member or the first shaft moves in the other axial direction while resisting an elastic force of the elastic member.

3. The straddled electric vehicle according to either of claims 1 or 2, wherein when the rotating member or the first shaft is not transmitting the driving power to the driving wheel, the elastic member applies essentially no elastic force to the rotating member or the first shaft.

4. The straddled electric vehicle according to any of claims 1 to 3, wherein out of the rotating member and the first shaft the rotating member moves in the other axial direction.

5. The straddled electric vehicle according to claim 4, wherein the elastic member is a disc spring for applying an elastic force pushing the rotating member in the one direction.

6. The straddled electric vehicle according to any of claims 1 to 5, wherein the plurality of shafts include a motor shaft capable of being rotated by the driving power of the motor and a driving shaft capable of rotating the driving wheel, wherein the first shaft is the driving shaft.

7. The straddled electric vehicle according to claim 6, wherein the plurality of shafts further includes an intermediate shaft capable of transmitting the driving power transmitted from the motor shaft to the driving shaft,
wherein the rotating member engaging the driving shaft is a gear coaxial with the driving shaft.

8. The straddled electric vehicle according to either of claims 6 or 7, wherein the spline gears provided on the driving shaft and the rotating member are inclined relative to the axial direction by 40 to 50 degrees.

9. The straddled electric vehicle according to any of claims 1 to 5, wherein the plurality of shafts include a motor shaft capable of being rotated by the driving power of the motor, a driving shaft capable of rotating the driving wheel, and an intermediate shaft capable of transmitting the driving power transmitted from the motor shaft to the driving shaft,
wherein the first shaft is the intermediate shaft.

10. The straddled electric vehicle according to any of claims 1 to 3, wherein the plurality of shafts include a motor shaft capable of being rotated by the driving power of the motor and a driving shaft capable of rotating the driving wheel,
wherein the first shaft is the motor shaft, and
the rotating member engaging the motor shaft is a member including a rotor of the motor.

11. The straddled electric vehicle according to claim 10, wherein the elastic member produces an elastic force pushing the motor shaft toward the one direction.

## Patentansprüche

1. Elektrisches Sattelfahrzeug (10), umfassend:
einen Motor (32; 32A; 32B), welcher einen elektrischen Motor umfasst;
ein Antriebsrad (11R); und
einen Kraftübertragungsmechanismus (40; 40A; 40B), welcher eine Mehrzahl von Wellen zur Übertragung einer Antriebskraft von dem Motor an das Antriebsrad aufweist,
wobei der Kraftübertragungsmechanismus umfasst:
eine erste Welle (42; 41A);
ein Drehteil (44; 43A), welches an der ersten Welle befestigt ist und in der Lage ist, eine Drehkraft mit der ersten Welle auszutauschen; und
ein elastisches Teil (51; 51A; 51B), welches in der Lage ist, eines von dem Drehteil, welches an der ersten Welle befestigt ist, und der ersten Welle in einer Axialrichtung vorzuspannen,
**dadurch gekennzeichnet, dass** die erste Welle (42; 41A) Keilwellenverzahnungen (421) auf einer Oberfläche davon aufweist, wobei die Keilwellenverzahnungen (421) relativ zu einer Axialrichtung der ersten Welle geneigt sind und das Drehteil Keilwellenverzahnungen (441) aufweist, welche mit den Keilwellenverzahnungen (421) auf der ersten Welle eingreifen können,
wobei die Keilwellenverzahnungen (421) auf der ersten Welle geneigt sind, um das Drehteil oder die erste Welle in die andere axiale Richtung zu bewegen, wenn das Antriebsrad in einer solchen Richtung dreht, dass das elektrische Sattelfahrzeug vorwärtsfährt und das Drehteil oder die erste Welle wirksam ist, um eine Drehgeschwindigkeit des Antriebsrads aufrechtzuerhalten, während die Drehgeschwindigkeit abfällt.

2. Elektrisches Sattelfahrzeug nach Anspruch 1, wobei das Drehteil oder die erste Welle sich in der anderen Axialrichtung bewegt, während einer elastischen Kraft des elastischen Teils widerstanden wird.

3. Elektrisches Sattelfahrzeug nach einem der Ansprüche 1 oder 2, wobei, wenn das Drehteil oder die erste Welle die Antriebskraft nicht an das Antriebsrad überträgt, das elastische Element im Wesentlichen keine elastische Kraft auf das Drehteil oder auf die erste Welle ausübt.

4. Elektrisches Sattelfahrzeug nach einem der Ansprüche 1 bis 3, wobei aus dem Drehteil und der ersten Welle, das Drehteil sich in der anderen Axialrichtung bewegt.

5. Elektrisches Sattelfahrzeug nach Anspruch 4, wobei das elastische Teil eine Tellerfeder ist, um eine elastische Kraft auszuüben, welche das Drehelement in der einen Richtung drückt.

6. Elektrisches Sattelfahrzeug nach einem der Ansprüche 1 bis 5, wobei die Mehrzahl von Wellen eine Motorwelle, welche durch die Antriebskraft des Motors drehbar ist und eine Antriebswelle einschließt, welche in der Lage ist, das Antriebsrad zu drehen, wobei die erste Welle die Antriebswelle ist.

7. Elektrisches Sattelfahrzeug nach Anspruch 6, wobei die Mehrzahl von Wellen ferner eine Zwischenwelle einschließt, welche in der Lage ist, die von der Motorwelle übertragene Antriebskraft an die Antriebswelle zu übertragen,
wobei das Drehteil, welches in Eingriff mit der Antriebswelle steht, ein Zahnrad ist, welches koaxial zu der Antriebswelle ist.

8. Elektrisches Sattelfahrzeug nach einem der Ansprüche 6 oder 7, wobei die Keilwellenverzahnungen, welche auf der Antriebswelle bereitgestellt sind, und das Drehteil um 40 bis 50 Grad relativ zu der Axialrichtung geneigt sind.

9. Elektrisches Sattelfahrzeug nach einem der Ansprüche 1 bis 5, wobei die Mehrzahl von Wellen eine Motorwelle einschließt, welche durch die Antriebskraft des Motors drehbar ist, eine Antriebswelle, welche in der Lage ist, das Antriebsrad zu drehen und eine Zwischenwelle, welche in der Lage ist, die von der Motorwelle übertragene Antriebskraft an die Antriebswelle zu übertragen,
wobei die erste Welle die Zwischenwelle ist.

10. Elektrisches Sattelfahrzeug nach einem der Ansprüche 1 bis 3, wobei die Mehrzahl von Wellen eine Motorwelle, welche durch die Antriebskraft des Motors drehbar ist, und eine Antriebswelle einschließt, welche in der Lage ist, das Antriebsrad zu drehen,
wobei die erste Welle die Motorwelle ist, und
das Drehelement, welches mit der Motorwelle eingreift, ein Teil ist, welches einen Rotor des Motors einschließt.

11. Elektrisches Sattelfahrzeug nach Anspruch 10, wobei das elastische Teil eine elastische Kraft erzeugt, welche die Motorwelle in der einen Richtung drückt.

## Revendications

1. Véhicule électrique à califourchon (10) comprenant :
un moteur (32, 32A, 32B) comprenant un moteur électrique,
une roue motrice (11R), et
un mécanisme de transmission de puissance (40, 40A, 40B) comportant une pluralité d'arbres pour transmettre une puissance d'entraînement du moteur à la roue motrice,
le mécanisme de transmission de puissance comprenant :
un premier arbre (42, 41A),
un élément rotatif (44, 43A) relié au premier arbre et étant capable d'échanger une force de rotation avec le premier arbre, et
un élément élastique (51, 51A, 51B) capable de solliciter l'un parmi l'élément rotatif relié au premier arbre et le premier arbre vers une direction axiale,
**caractérisé en ce que** le premier arbre (42, 41A) comporte des cannelures (421) sur une surface de celui-ci, les cannelures (421) étant inclinées par rapport à une direction axiale du premier arbre et l'élément rotatif comporte des cannelures (441) pouvant s'engrener dans les cannelures (421) sur le premier arbre,
dans lequel les cannelures (421) sur le premier arbre sont inclinées de façon à déplacer l'élément rotatif ou le premier arbre vers l'autre direction axiale lorsque la roue motrice tourne dans une direction faisant avancer le véhicule électrique à califourchon et l'élément rotatif ou le premier arbre agit pour maintenir une vitesse de rotation de la roue motrice lorsque la vitesse de rotation diminue.

2. Véhicule électrique à califourchon selon la revendication 1, dans lequel l'élément rotatif ou le premier arbre se déplace dans l'autre direction axiale tout en résistant à une force élastique de l'élément élastique.

3. Véhicule électrique à califourchon selon l'une des revendications 1 ou 2, dans lequel lorsque l'élément rotatif ou le premier arbre ne transmet pas la puissance d'entraînement à la roue motrice, l'élément élastique n'applique essentiellement aucune force élastique sur l'élément rotatif ou le premier arbre.

4. Véhicule électrique à califourchon selon l'une quelconque des revendications 1 à 3, dans lequel, parmi l'élément rotatif et le premier arbre, l'élément rotatif se déplace dans l'autre direction axiale.

5. Véhicule électrique à califourchon selon la revendication 4, dans lequel l'élément élastique est un ressort de disque destiné à appliquer une force élastique poussant l'élément rotatif dans ladite une direction.

6. Véhicule électrique à califourchon selon l'une quelconque des revendications 1 à 5, dans lequel la pluralité des arbres inclut un arbre de moteur capable d'être mis en rotation par la puissance d'entraînement du moteur et un arbre d'entraînement capable de faire tourner la roue motrice, dans lequel le premier arbre est l'arbre d'entraînement.

7. Véhicule électrique à califourchon selon la revendication 6, dans lequel la pluralité d'arbres inclut en outre un arbre intermédiaire capable de transmettre la puissance d'entraînement transmise par l'arbre de moteur à l'arbre d'entraînement,
dans lequel l'élément rotatif engageant l'arbre d'entraînement est un engrenage coaxial avec l'arbre d'entraînement.

8. Véhicule électrique à califourchon selon l'une des revendications 6 ou 7, dans lequel les cannelures agencées sur l'arbre d'entraînement et l'élément rotatif sont inclinées par rapport à la direction axiale de 40 à 50 degrés.

9. Véhicule électrique à califourchon selon l'une quelconque des revendications 1 à 5, dans lequel la pluralité d'arbres inclut un arbre de moteur capable d'être mis en rotation par la puissance d'entraînement du moteur, un arbre d'entraînement capable de faire tourner la roue motrice et un arbre intermédiaire capable de transmettre la puissance d'entraînement transmise par l'arbre de moteur à l'arbre d'entraînement,
dans lequel le premier arbre est l'arbre intermédiaire.

10. Véhicule électrique à califourchon selon l'une quelconque des revendications 1 à 3, dans lequel la pluralité d'arbres inclut un arbre de moteur capable d'être mis en rotation par la puissance d'entraînement du moteur et un arbre d'entraînement capable de faire tourner la roue motrice,
dans lequel le premier arbre est l'arbre de moteur, et
l'élément rotatif engageant l'arbre de moteur est un élément incluant un rotor du moteur.

11. Véhicule électrique à califourchon selon la revendication 10, dans lequel l'élément élastique produit une force élastique poussant l'arbre de moteur vers ladite une direction.
